# Europäisches Patentamt
# European Patent Office
# Office européen des brevets

(11) Veröffentlichungsnummer: **0 004 576**
**B1**

(12) **EUROPÄISCHE PATENTSCHRIFT**

(45) Veröffentlichungstag der Patentschrift:
**12.09.84**

(21) Anmeldenummer: **79100755.2**

(22) Anmeldetag: **14.03.79**

(51) Int. Cl.³: **F 16 L 9/04,** F 01 N 7/08 //
**F16L59/14**

(54) **Ebenwandiger Kanal aus Metallblechtafeln für die Fortleitung von Abgasen grosser Verbrennungsmotoren oder Gasturbinen.**

(30) Priorität: **31.03.78 DE 2813821**

(43) Veröffentlichungstag der Anmeldung:
**17.10.79 Patentblatt 79/21**

(45) Bekanntmachung des Hinweises auf die Patenterteilung:
**12.09.84 Patentblatt 84/37**

(84) Benannte Vertragsstaaten:
**BE CH FR GB NL**

(56) Entgegenhaltungen:
**DE - A - 2 356 190**
**DE - B - 1 159 223**
**DE - U - 7 408 661**
**DE - U - 7 526 376**
**FR - A - 2 262 769**
**US - A - 3 769 923**
**US - A - 3 903 928**

(73) Patentinhaber: **Grünzweig + Hartmann Montage GmbH,**
**Westendstrasse 17, D-6700 Ludwigshafen/Rhein (DE)**

(72) Erfinder: **De Lank, Gerd, Dipl.-Ing., Bahnhofstrasse 13,**
**D-6805 Heddesheim (DE)**

(74) Vertreter: **Betzler, Eduard, Dipl.-Phys. et al,**
**P.O.Box 700209 Plinganserstrasse 18a,**
**D-8000 München 70 (DE)**

## Beschreibung

Die Erfindung betrifft einen ebenwandigen Kanal aus Metallblechtafeln für die Fortleitung von Abgasen grosser Verbrennungsmotoren oder Gasturbinen, der grossen zeitlichen Temperaturgradienten ausgesetzt ist, Versteifungen aufweist und von einer Wärmedämmung umgeben ist.

Ein solcher ebenwandiger Kanal geht auf eine offenkundige Vorbenutzung durch die Anmelderin zurück.

Derartige ebenwandige Kanäle, deren Wände selbstverständlich in Gasströmungsrichtung Richtungsänderungen, wie Krümmungen, folgen können, weisen Querschnittsabmessungen in der Grössenordnung von bis zu 4 m × 6 m auf und sind daher üblicherweise mit aussenseitig angebrachten Versteifungen in Form von Flachstahlrippen, U- oder I-Profilen versehen, um die auf die Wände einwirkenden Kräfte, die z.B. auf Über- oder Unterdrücke, Windbeaufschlagung, Eigengewichte, sonstige zusätzliche Lasten usw. zurückgehen, aufzunehmen. Da die im Inneren solcher Kanäle fliessenden Gasströme beim Anfahren der Verbrennungsmotoren oder Gasturbinen, wo die Temperatur im Gasstrom innerhalb weniger Minuten um mehr als 500°K ansteigen kann, grosse zeitliche Temperaturgradienten aufweisen, treten in den aus Gründen der Statik erforderlichen hohen Versteifungsrippen, bedingt durch die Wärmekapazität und den Wärmefluss, Temperaturdifferenzen zwischen der Innen- und Aussenkante auf, die das Material über die Streckgrenze hinaus beanspruchen und zu Rissen führen. Bekanntlich ist, z.B. für Flachstahlrippen, die maximal mögliche Temperaturdifferenz zwischen Innen- und Aussenkante:

$$\Delta t_{zul} = \frac{2\sigma}{E\alpha} \quad (°K)$$

Hierbei ist:

$\sigma$ = zulässige Biegespannung (kp/cm²)
$E$ = Elastizitätsmodul (kp/cm²)
$\alpha$ = Wärmedehnungskoeffizient (1/°K)

Die zulässige Temperaturdifferenz $\Delta t_{zul}$ auf der Versteifung ist somit unabhängig von dem Trägheitsmoment und von der Höhe der Versteifungsrippen, und es ist daher nicht möglich, durch Verstärkung der Versteifungsrippen die erforderliche Festigkeit zu erreichen.

Die Annahme, dass der Wärmefluss in den Versteifungen gross genug sei, um keine grossen Temperaturdifferenzen auftreten zu lassen, trifft nicht zu. Beim Anfahren von Gasturbinen konnten an ca. 200 mm hohen Versteifungsrippen zwischen Innen- und Aussenkante nämlich Temperaturdifferenzen bis zu 280°K gemessen werden.

Durch die Umhüllung der Kanäle mit einer Wärmedämmung allein ist das Problem der Vermeidung der Rissebildung in den Versteifungen nicht zu lösen. Diese Risse treten nämlich trotz der vorgesehenen Wärmedämmung auf und sind wegen ihres Vorhandenseins auch praktisch nicht erkennbar.

Es ist durch offenkundige Vorbenutzung durch die Anmelderin bereits bekannt, die bei Überdruck auftretenden Druckkräfte von Zugankern aufnehmen zu lassen, die senkrecht zur Kanalachse in beiden Richtungen jeweils zwischen den einander gegenüberliegenden Wänden angebracht werden. Da die Zuganker der gleichen Wärmebeanspruchung wie die Wände unterliegen, ergeben sich keine Wärmedehnungsprobleme. Werden jedoch zusätzliche Einbauten in den Kanälen, wie z.B. Kulissen für Abgasschalldämpfer erforderlich, so müssen die Zuganker umständlich durch diese zusätzlichen Einbauten hindurchgeführt werden.

Es ist durch eine offenkundige Vorbenutzung der Anmelderin ferner bekannt, aussenseitig mit Abstand von den Kanal- oder Gehäusewänden Stahlträger anzuordnen, die kalt bleiben und die Kräfte aufnehmen. Zur Berücksichtigung der unterschiedlichen Wärmedehnungen zwischen den Kanalwänden und den Stahlträgern, müssen diese Stahlträger punktweise gelenkig mit dem Kanal verbunden werden, was arbeitsaufwendig ist.

Hier will die Erfindung Abhilfe schaffen. Die Erfindung, wie sie in den Ansprüchen gekennzeichnet ist, löst die Aufgabe, die gesamte Wandung des Kanals einschliesslich der notwendigen Versteifungen gleichmässig zu beaufschlagen und zu temperieren und damit eine örtlich unterschiedliche Beanspruchung des Materials über die Streckgrenze hinaus mit der damit verbundenen Gefahr einer Rissebildung zu vermeiden.

Aus der DE-A-2 356 190 und aus der DE-U-7 408 661 sind zwar bereits Lüftungskanäle bekannt, die aus Metall mit beliebigem Querschnitt bestehen, wobei das Metall profiliert und die Profilierung vorzugsweise durch Faltung erzielt ist. Diese Lüftungskanäle dienen jedoch nicht der Fortleitung heisser Gase, so dass bei ihnen die der Erfindung zugrunde liegenden Probleme gar nicht auftreten.

Damit die Seitenwände der Versteifungen gut beaufschlagt werden, sollen sie vorzugsweise in einem Winkel $\alpha \leq 90°$ zur Strömungsrichtung des Gases angeordnet sein.

Die Zeichnung zeigt in

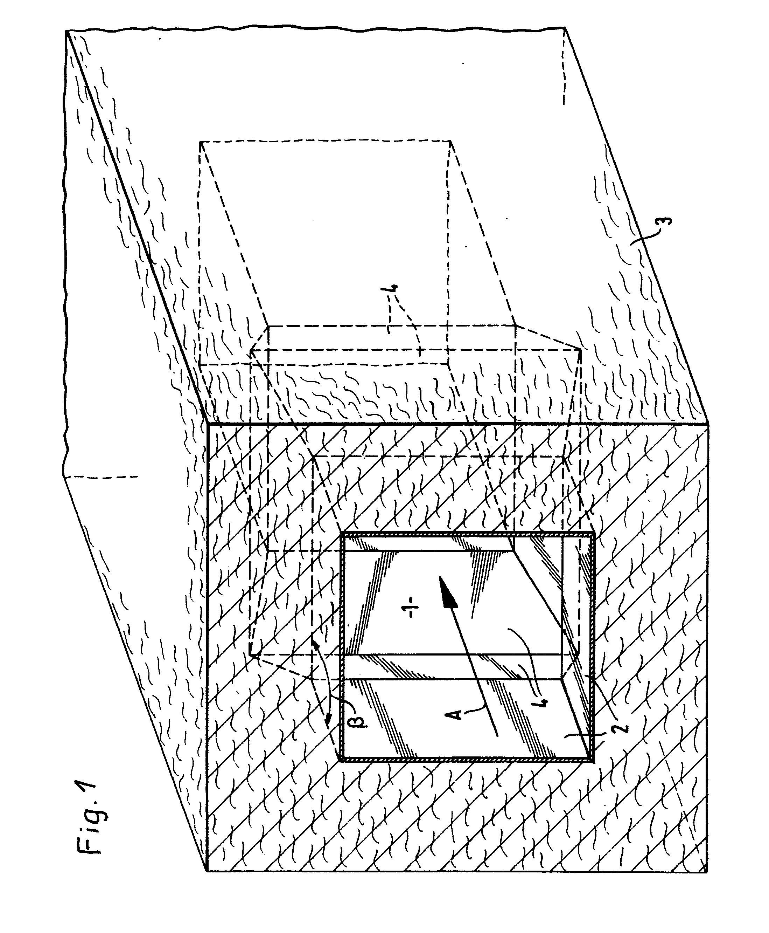

Fig. 1 einen räumlich dargestellten Ausschnitt aus einem isolierten ebenwandigen Kanal mit aus den die Wand bildenden Tafeln ausgeformten Versteifungen,

Fig. 2 die Kanal- oder Gehäusewand im Schnitt und in der Seitenansicht; und in den

Fig. 3 bis 5 mehrere mögliche Ausführungsformen von Versteifungen in der Darstellungsweise nach Fig. 2.

Ein heisses Gas durchströmt in Richtung des Pfeiles A einen Kanal 1, dessen Begrenzung durch Tafeln 2 aus Metallblech gebildet ist. Der Kanal 1 ist von einer Wärmedämmung 3 umgeben, die beispielsweise aus einer Glas- oder Mineralfaserummantelung besteht.

In den Tafeln 2 sind Versteifungen 4 vorgesehen, deren Seitenwände 5 einen Winkel $\alpha \leq 90°$ zur Richtung des Gasstromes 6 aufweisen. Mit der Wahl dieses Winkels ist noch eine gute Beaufschlagung der Seitenwand durch den Gasstrom gewährleistet. Die Abstände B der einzelnen Versteifungen zueinander und die Höhe H der Versteifungen 4 sind vor allen Dingen durch die statischen Erfrodernisse bestimmt. Um die Höhe H möglichst klein zu halten, sollen die Auflager der jeweiligen Versteifungen zueinander möglichst nahe sein. Dies wird erreicht, indem der Winkel β zwischen Versteifung 4 und der Richtung des Gasstromes 90° beträgt. Zur Wärmedämmung ist die Tafel 2 mit einer Wärmedämmschicht 7 und gegebenenfalls mit einer Schutzschicht 8 gegen mechanische und chemische Einflüsse geschützt und ummantelt.

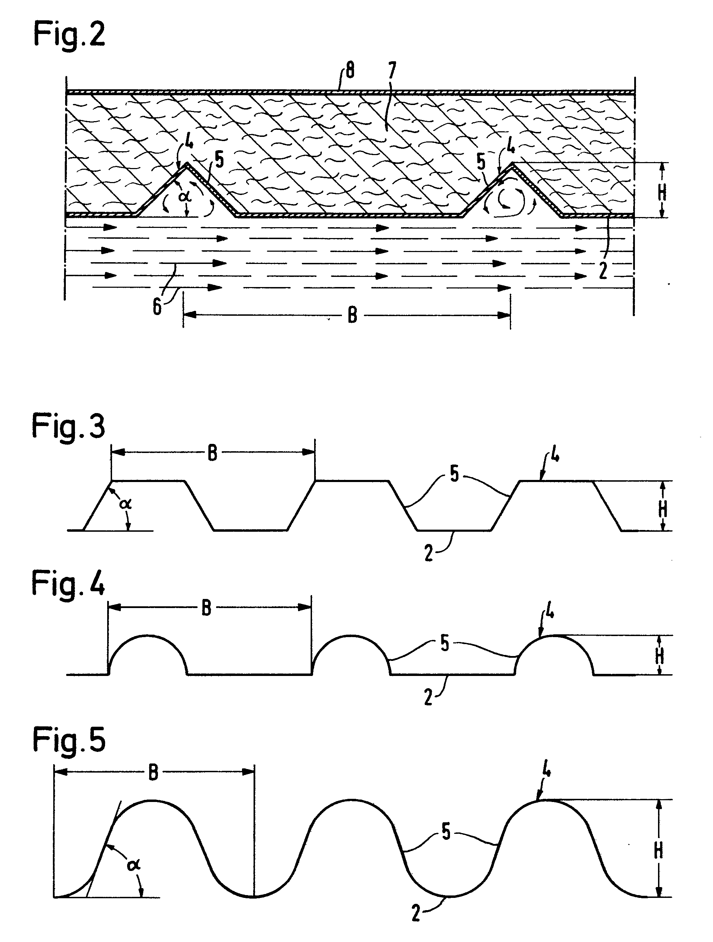

In Fig. 3, 4 und 5 sind andere Ausführungsformen von Tafeln 2 mit Versteifungen 4 dargestellt. Die dargestellten Ausführungsformen der Versteifungen 4 lassen sich selbstverständlich variieren.

## Patentansprüche

1. Ebenwandiger Kanal aus Metallblechtafeln für die Fortleitung von Abgasen grosser Verbrennungsmotoren oder Gasturbinen, der grossen zeitlichen Temperaturgradienten ausgesetzt ist, Versteifungen (4) aufweist und von einer Wärmedämmung (3 bzw. 7) umgeben ist, dadurch gekennzeichnet, dass die Versteifungen (4) als quer zur Strömungsrichtung der Abgase verlaufende, nach aussen den Querschnitt des Kanals vergrössernde und im gleichen Abstand (B) zueinander angeordnete Wellungen in der Kanalwand ausgebildet sind.

2. Ebenwandiger Kanal nach Anspruch 1, dadurch gekennzeichnet, dass die Versteifungen (4) Seitenwände (5) aufweisen, die unter einem Winkel α ≤ 90° zur Strömungsrichtung der Abgase angestellt sind.

## Claims

1. A plane-walled channel made of sheet-metal plate for conducting the exhaust gases of large internal combustion engines or gas turbines, the channel being exposed to large temperature gradients in time, having reinforcements (4) and being surrounded by heat insulation (3 and 7), characterized in that the reinforcements (4) are designed as waves in the channel wall extending perpendicularly to the direction of flow of the exhaust gases, enlarging the cross-section of the channel towards the outside and being spaced an equal distance (B) from each other.

2. A plane-walled channel as in claim 1, characterized in that the reinforcements (4) have side walls (5) positioned at an angle α ≤ 90° to the direction of flow of the exhaust gases.

## Revendications

1. Carneau à parois lisse en plaque de tôle métallique pour l'évacuation des fumées produites par de grands moteurs à combustion ou turbines à gaz, étant soumis à d'importants gradients de température temporels, présentant de renforts (4) et étant entouré d'une isolation thermique, caractérisé en ce que les renforts (4) sont réalisés sous forme d'ondulation de la parois du carneau, en position transversale relative au sens de l'écoulement des fumées, se trouvant à distances égales (B) l'un à l'autre, et étendant la section du carneau à l'extérieur.

2. Carneau à parois lisse suivant demande 1, caractérisé en ce que les renforts (4) présentent des parois latérales (5) se trouvant en un angle d'attaque de α ≤ 90° relatif au sens d'écoulement des fumées.

Fig.1

# Fig.2

# Fig.3

# Fig.4

# Fig.5